# EUROPEAN PATENT APPLICATION

(11) **EP 1 187 069 A2**
(43) Date of publication of application: **13.03.2002**
(21) Application number: 01121079.6
(22) Date of filing: 03.09.2001
(51) Int. Cl.: G06T 11/00

(54) **Apparatus, method, signal and computer program product configured to product output image adjustment for image files**

(30) Priority: 01.09.2000 JP 2000265794; 13.10.2000 JP 2000312991; 18.07.2001 JP 2001218744
(71) Applicant: SEIKO EPSON CORPORATION, Shinjuku-ku, Tokyo 163-0811 (JP)
(72) Inventor: Kuwata, Naoki, Seiko Epson Corporation, Suwa-shi, Nagano-ken 392-8502 (JP); Nakami, Yoshihiro, Seiko Epson Corporation, Suwa-shi, Nagano-ken 392-8502 (JP); Edatsune, Isao, Seiko Epson Corporation, Suwa-shi, Nagano-ken 392-8502 (JP); Fukasawa, Kenji, Seiko Epson Corporation, Suwa-shi, Nagano-ken 392-8502 (JP)
(74) Representative: Winter, Brandl, Fürniss, Hübner, Röss, Kaiser, Polte Partnerschaft

(57) **Abstract**

An apparatus, method, signal and computer program product are configured to provide an output image adjustment for image files. A CPU of a color printer performs gamma correction and a matrix operation M on RGB color space image data derived from a matrix S operation. The CPU performs gamma conversion on image data using established gamma values. Matrix operation M converts the RGB color space to the XYZ color space. When executing matrix operation M, the CPU refers to a color space tag, contained in an image file produced at an image generating device, so as to preserve the color space used during synthesis of the image data, and performs the matrix operation using a matrix (M) corresponding to color space written in the file.

## Description

### BACKGROUND OF THE INVENTION

### Field of the Invention

The present invention relates to apparatuses, methods, signals and computer program product that involve color space conversion processing on image data. More particularly, the present invention relates to apparatuses, methods, signals and computer program product used in, and by, devices such as digital still cameras (DSC), digital video cameras (DVC), scanners, which capture and store images in a first color space, with a recognition that a color space conversion operation will be performed in downstream processing. The invention also relates to the apparatuses, methods, signals and computer program product that perform the downstream processing, perhaps in the output device, such as a printer or display. Thus, the invention also relates to signal processing hardware and software components, including propagated data signals, and presentation devices, such as printers.

### Discussion of the Background

In contrast to silver halide, image color photography with an ordinary camera, wherein images are typically output by being transferred onto photographic paper, digital still camera (DSC) and digital video camera (DVC) photography, or digital image data read by a scanner, has the advantage of ease of image processing. In applications such as DSCs, image data is digital, and may thus be stored in memory. A convention file format is JPEG format --one of the formats for compressed image files. In a JPEG image file, image data is defined using a YCbCr color space so as to enable a high compression ratio. Accordingly, in applications such as DSCs, image data defined in an RGB color space by a CCD must, therefore, be converted to the YCbCr color space. The RGB color space used in applications, such as DSC applications, is typically a standard color space for personal computers (PC) CRT monitors (e.g., sRGB: IEC61966-2-1).

In PCs, since the RGB color space is the standard color space for image data, a PC receiving a JPEG file must decompress the JPEG file and convert the input image data color space from the YCbCr color space to the RGB color space. As noted, image data converted to the RGB color space is handled, for example, as sRGB color space data for display on a monitor, or is converted to the CMYK color space for print output on a print medium via a printer.

However, image processing devices and image output devices--such as CRTs, LCDs, printers, projectors, and television receivers--each have different image output characteristics, such as color reproduction (color space). Therefore, image files produced by a DSC will not necessarily be output (i.e., presented to an end user) with the correct color by all output devices. For example, where an image file is created based on an image output targeted for a CRT, the color reproduction capabilities of the printer that prints that image may not be fully used. This may be the case even where the image file is output from a printer having a wide gamut, creating the problem of an inability to achieve proper image output. This problem is not limited to DSCs, and is shared by other image file generating devices, such as DVCs.

On the other hand, while conversion to the RGB color space from the YCbCr color space based on RGB color space characteristics displayable by CRT monitors is common practice, it is not easy to convert color space characteristics well. Furthermore, there is little *a priori* knowledge provided to a DSC as to what type of output device will be used to present the final image to the end user. Thus, the signal processing performed downstream of the DSC may actually detract from the inherent picture quality of the image data recorded by the DSC.

### SUMMARY OF THE INVENTION

It is an object of the present invention to solve the above-described and other problems associated with mismatched color space conversion processes performed downstream of the DSC, or other image file generating device.

It is another object of the present invention to provide a way to create image files whereby image data produced by an image generating device that uses a first color space can be reproduced correctly by image processing devices and output devices, in view of a second color space this actually used by the devices.

It is a further object to provide an image processing device that affords accurate image processing, preserving all color values of image data actually captured by the image file generating device.

To solve the above problems, the invention, in a first embodiment thereof, provides an image data generating apparatus. The image data generating apparatus includes an image data generating mechanism for generating image data; and an image file generating mechanism for generating an image file containing the generated image data, together with associated color space information for use by an image processing apparatus.

The image file generating apparatus pertaining to this first embodiment of the invention, generates an image file containing the aforementioned generated image data, together with associated color space information for use by an image processing apparatus, whereby the image processing apparatus may be provided with color space information for use by the apparatus. For example, a particular color space, or color space defining parameters, may be specified the image file generating apparatus for use in color space conversion by the image processing apparatus.

In the image file generating apparatus pertaining to this first embodiment of the invention, the aforementioned color space information may take the form of matrix values for use in color space conversion processing executed by the aforementioned image processing apparatus. This enables the image processing apparatus to perform color space conversion without the need to interpret color space information. The color space information may also include adjustment value(s) used to redefine a "standard," or at least predetermined, color space conversion matrix.

The image data generating apparatus pertaining to this first embodiment of the invention may further include:
a color space information designating mechanism for designating color space information for use by the image processing apparatus; and
a color space information storage mechanism for storing a plurality of color space information parameters designated as the color space information;
wherein the color space information designating mechanism includes:
a display mechanism for displaying the stored color space information; and
a selection mechanism for selecting one item of color space information from among the displayed items of color space information. An advantage of this particular arrangement is that it affords easy selection of the output color space.

The image data generating apparatus pertaining to this first embodiment of the invention may further include:
a color space information designating mechanism for designating color space information for use by the image processing apparatus; and
a color space information storage mechanism for storing a plurality of combinations of identifying information that identifies an image processing apparatus for image processing of the image file with color space information designated as the color space information;
wherein the color space designating mechanism includes:
a display mechanism for displaying candidates for the image processing apparatus for performing image processing; and
a selection mechanism for selecting one image processing apparatus from among the displayed image processing apparatus candidates. This arrangement affords easy selection of an image processing apparatus, thereby facilitating selection of a color space for conversion by an image processing apparatus.

In a second embodiment, an image data generating apparatus is used, which includes: an image data acquiring mechanism for acquiring image data; a color space information designating mechanism for designating the output color space to be used in color space conversion to be performed by an image processing apparatus; and an image file generating mechanism for generating an image file containing the acquired image data, together with associated information pertaining to the designated output color space.

According to the image data generating apparatus pertaining to this second embodiment of the invention, it is possible to generate an image file capable of designating an output color space for use by an image processing device performing image processing of an image file. Thus, during image processing of an image file the color space of image data can be converted to a color space suitable for the particular image data. This allows image data to be reproduced correctly, while also affording output of images with higher saturation.

In the image data generating apparatus pertaining to this second embodiment of the invention, the output color space includes the same color space used in synthesis of the image data, or of a color space having a wider gamut. This provision of this arrangement enables color space conversion to be performed without losing the gamut designated by the image data during synthesis.

In the image data generating apparatus pertaining to the first or second embodiment of the invention, the image data generating apparatus may be a digital still camera.

In a third embodiment, the invention provides a program for generating image data. The program pertaining to this third embodiment of the invention a computer-implemented mechanism for generating image data; and a function for generating an image file containing the generated image data, together with associated color space information for use by an image processing apparatus.

The program that pertains to this third embodiment of the invention affords working effects analogous to the image data generating apparatus of the first embodiment. Like the image data generating apparatus of the first embodiment, the program pertaining to this third embodiment of the invention may take various forms.

In a fourth embodiment, the invention provides a program for generating image data. The program pertaining to this fourth embodiment of the invention executes by way of a computer a function for acquiring image data; a function for designating an output color space for color space conversion to be performed by an image processing apparatus; and a function for generating an image file containing the generated image data, together with associated information pertaining to the designated output color space.

The program which pertains to this fourth embodiment of the invention affords working effects analogous to the image data generating apparatus of the second embodiment. Like the image data generating apparatus of the second embodiment, the program pertaining to this fourth embodiment of the invention may take various forms.

In a fifth embodiment, the invention provides an image processing apparatus for performing image processing on image files containing image data and color space information. The image processing apparatus pertaining to this fifth embodiment of the invention includes: an image file acquiring mechanism for acquiring an image file; a retrieving mechanism for retrieving the color space information from the acquired image file; and color conversion processing mechanism for converting the color space of the image data on the basis of the color space information when the color space information has been retrieved.

According to the image processing apparatus which pertains to this fifth embodiment of the invention, there is provided a color conversion processing mechanism for converting the color space of image data on the basis of color space information, whereby the color space of image data can be converted on the basis of color space information contained in an image file. This allows an image to be presented by an output device to be rendered as an accurate reproduction of the original image captured by the DSC, or other image data source.

In the image processing apparatus that pertains to this fifth embodiment of the invention, in the event that color space information is not retrieved, the color conversion processing mechanism may convert the color space of the image data on the basis of predetermined color space information. By the provision of this arrangement, the color space of image data can be converted on the basis of predetermined color space information, even where the image file does not contain color space information.

In the image processing apparatus which pertains to this fifth embodiment of the invention, an arrangement wherein the image data contained in the image file is represented by a first color space; the image file data acquiring mechanism converts the color space of the image data contained in the image file from the first color space to a second color space; and it is also possible for the color conversion processing mechanism to convert the color space of the image data from the second color space to a third color space.

In the image processing apparatus which pertains to this fifth embodiment of the invention, the first color space may be the YCbCr color space, the second color space a first RGB color space, and the third color space a second RGB color space wherein at least a portion thereof has a gamut equal to or wider than first RGB color space. By way of this arrangement, color space conversion can be performed without any loss of the gamut of image data in the first RGB color space, and images have higher saturation than those obtained with unmodified image data of the first RGB color space.

In the image processing apparatus that pertains to this fifth embodiment of the invention, the second RGB color space may have a width, or area, at least equal to that of the color space during synthesis of the image data. This allows the gamut used for generation of the image data to be available for color space conversion processing. The third color space may be the CIELAB color space in place of the second RGB color space. Here, absolute color space image data is obtained, making image processing even easier.

The image processing apparatus pertaining to the fifth embodiment of the invention may additionally includes an output mechanism for outputting the image-processed image data. This allows the image data to be output.

In a sixth embodiment, the invention provides a program for executing image processing of an image file containing image data and color space information. The program pertaining to this sixth embodiment of the invention executes a computer-implemented process for acquiring an image file; a function for retrieving the color space information from the acquired image file; and a function for converting the color space of the image data on the basis of the color space information when the color space information has been retrieved.

The program pertaining to the sixth embodiment of the invention affords working effects analogous to the image processing apparatus of the fifth embodiment. Like the image processing apparatus of the sixth embodiment of the invention, the program pertaining to this sixth embodiment of the invention may take various forms.

The preceding embodiments of the invention may be reduced to practice by way of other methods and recording media formats than those that have been specifically discussed.

### BRIEF DESCRIPTION OF THE DRAWINGS

Figure 1 is an illustrative diagram of an exemplary image data output system in which the image processing device of the first embodiment may be implemented.
Figure 2 is a block diagram showing a simplified arrangement for a digital still camera capable of generating an image file, holding image data, for output by the image processing device of the first embodiment.
Figure 3 is an illustrative diagram showing the general internal structure of an image file stored in an Exif file format.
Figure 4 is a block diagram showing a general arrangement of a color printer according to the present invention.
Figure 5 is an illustrative diagram showing an internal arrangement of control circuit of the color printer of Figure 4.
Figure 6 is a flow chart showing the processing routine for the printing process of color printer pertaining to the first embodiment.
Figure 7 is a flow chart showing the flow of image processing in color printer pertaining to the first embodiment.
Figure 8 is an illustrative diagram showing the visible area (VA) of the RGB color space and color space ranges (gamuts) for the sRGB (SR), NTSC (NS), and wRGB (WR) color spaces.
Figure 9 is a flow chart depicting image processing in a color printer as a second embodiment of the present invention.
Figure 10 is a flow chart depicting image processing in a color printer 20 as a third embodiment of the present invention.

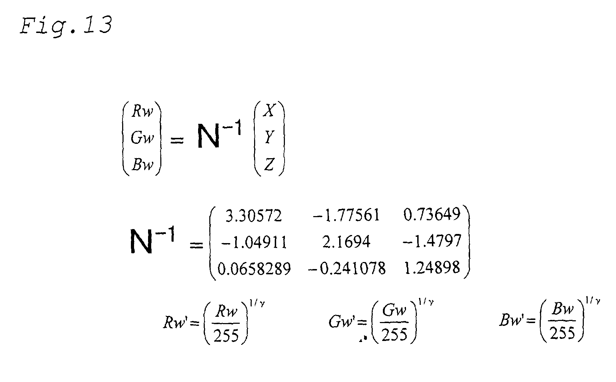

Figures 11-13 are descriptions of mathematical expressions used for describing conversion processes performed as part of the present invention.

### DETAILED DESCRIPTION OF THE PREFERRED EMBODIMENTS

A more complete understanding of the present invention will be gained through a discussion of the various embodiments A-D, discussed below and illustrated in the appended figures.
A. Arrangement of image data output system including image output device
B. Arrangement of image output device
C. Image processing in image output device
D. Other embodiments

### A. Arrangement of image data output system including image output device

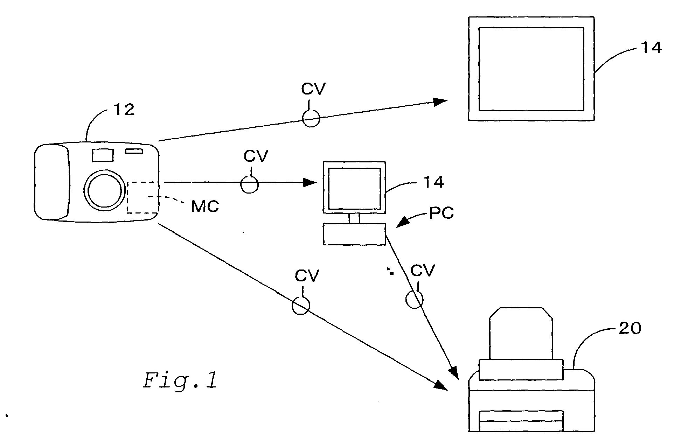

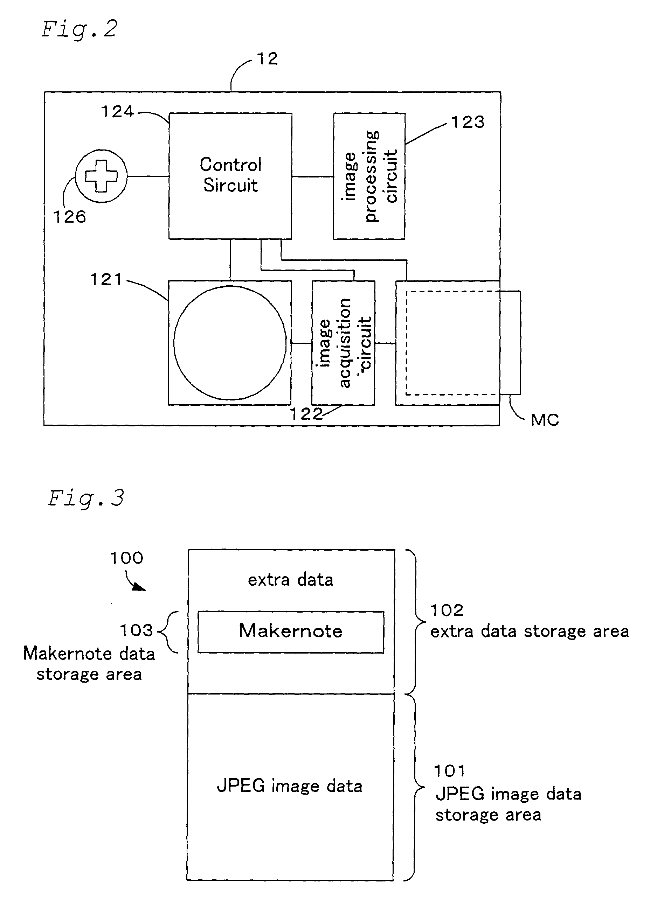

The following description of the arrangement of an image data output system in which the image processing device of the first embodiment may be implemented makes reference to Figs. 1 and 2. Fig. 1 is an illustrative diagram of an exemplary image data output system in which the image processing device of the first embodiment may be implemented. Fig. 2 is a block diagram showing a simplified arrangement for a digital still camera (DSC) capable of generating an image file (with image data contained therein) for output by the image processing device of the first embodiment.

Image data output system 10 includes a DSC 12 serving as an input device for generating image files; and a color printer 20 serving as an output device for performing image processing of image files generated by DSC 12, and outputting the resultant images. Besides a printer 20, the output device could be a monitor 14 (e.g. an CRT display, LCD display etc.), a projector, or the like; however in the following description the output device is a color printer 20. The DSC 12 may also include an I/O port, such as a USB, IEEE 1394 port, or a wireless port, such as IR or RF, (e.g., Bluetooth compatible). When a "wired" communication channel is used (CV), such a coaxial cable, USB cable, or CAT 5 cable, for outputting the resulting image file, the propagated data signal is sent over the channel as an electric signal. When transmitted over a wireless channel, the propagated data signal is sent as an electromagnetic signal. As a data structure format for saving the image data (GD) in DSC 12, a JPEG format is typical, but it is also possible to use other file formats such as TIFF, GIF, BMP, and RAW.

Digital still camera 12 is a camera for acquiring images by way of imaging optical information with a digital device (e.g. a CCD or photomultiplier). As shown in Fig. 2, the DSC 12 includes an optical circuit 121 for gathering optical information; an image acquisition circuit 122 for controlling the digital device in order to acquire an image; an image processing circuit 123 for processing the acquired digital image; and a control circuit 124 for controlling the other circuits. The DSC 12 stores the acquired image as digital data in a memory device, namely, a memory card MC. Alternatively, the image data is stored in semiconductor memory installed in the DSC 12, and then transmitted via a communication channel to an output device, or an intermediate processing device (such as a PC) prior to being delivered to the output device (such as a printer). The format for storing image data in a DSC 12 is typically the JPEG format, but other storage formats could be employed, such as TIFF, GIF, BMP, or RAW format. DSC 12 is provided with a Select/Set button 126 for selecting and setting various functions.

Digital images generated by the DSC 12 are defined by a RGB color space. Most typically, the RGB color space will be the sRGB color space, but the NTSC-RGB color space, which has a wider gamut than the sRGB color space, may be selected as well. For storage on the memory card MC, data represented by the RGB color space is converted to the YCbCr color space, which has color space characteristics suited to the JPEG format, the format in which the data will be compressed and stored. To store image data in JPEG format, image data represented in the RGB color space is subjected to an inverse matrix operation with a matrix S, described later, to convert the image data color space from an RGB color space, e.g. the sRGB color space, to the YCbCr color space. During conversion from the sRGB color space to the YCbCr color space, color values lying outside the gamut of the sRGB color space, namely, color values that are data having negative values, are also converted effectively. This would not be the case if standard processing techniques were used because the negative values would simply be converted, thus loosing the inherent information contained in this negative values.

The DSC 12 employed in this image data output system 10 attaches image processing control information Gl to the image data in the image file stored in the memory card MC. To retain exchangeability of image files, the image file generated by DSC 12 typically has a file structure in accordance with the format specified for DSC image files (Exif). The Exif specification was developed by the Japan Electronics and Information Technology Industries Association (JEITA).

The following description of general structure in an image file having a file format in accordance with the Exif file format makes reference to Fig. 3. Fig. 3 is an illustrative diagram showing the general internal structure of an image file 100 stored in the Exif file format. The terms "file structure ," "data structure," and "storage area" in this working example mean a file or data field configured to hold a digital representation of an image when a file or data, etc. is stored within a certain storage range of a storage device.

The Exif file, i.e. image file 100, contains a JPEG image data storage area 101 for storing image data in JPEG format, and an extra data storage area 102 for storing extra data of various kinds relating to the stored JPEG image data. The extra data storage area 112 contains, in TIFF format, information relating to photography parameters when the JPEG image is taken (e.g. date, exposure, shutter speed, etc.), and thumbnail image data for JPEG images stored in JPEG image data storage area 101. When image data is written to the memory card MC, this extra information is automatically stored in the extra data storage area 102. The extra data storage area 102 is also provided with a Makernote data storage area 103, an undefined area currently left available for use by DSC manufacturers. The Makernote data storage area 103 can be used by DSC manufacturers to store any desired information. It is common knowledge to practitioners of the DSC art that the Exif format uses tags to identify data of various kinds.

The Makernote data storage area 103 is also provided with an arrangement whereby stored data can be identified by tags. In the present embodiment, there is stored image processing control information Gl for control of image processing operations in color printer 20. The image processing control information may be set by a DSC manufacturer through a trial and error process of matching the operational characteristics associated with a particular model of DSC, with the operational characteristics of a particular model of printer. This combination of characteristics, embodied in the parameters, ensures that an image output by a printer will be faithful to the image intended to be captured by the photographer.

Image processing control information Gl consists of information designating image output parameters for producing optimal output results with reference to the color reproduction capabilities and image output capabilities of color printer 20 or other output device. Information stored as image processing control information Gl includes gamma values, parameters relating to the target color space, and parameters relating to contrast, color balance adjustment, sharpness, and color correction. Parameters relating to target color space designate the color space to be implemented during image processing in the output device, more specifically, the matrix values of the color space conversion matrix. Parameters relating to color space represent color space information that can be specified (set) independently of the color space used during image data synthesis.

An image file GF generated by DSC 12 is sent to a color printer 20 via a cable CV (or wireless channel) and a computer PC, or simply via the cable CV (or wireless channel). Alternatively, image files may be sent to color printer 20 via a computer PC connected to the memory card MC installed in digital still camera 12, or by directly connecting the memory card MC to color printer 20. The following description assumes direct connection of the memory card MC to color printer 20. Once again, as an alternative to the wired connections, wireless communications may be used as well for transferring the image data file, including the image data and control information stored in the Makernote portion of the Exif file.

### B. Arrangement of image output device

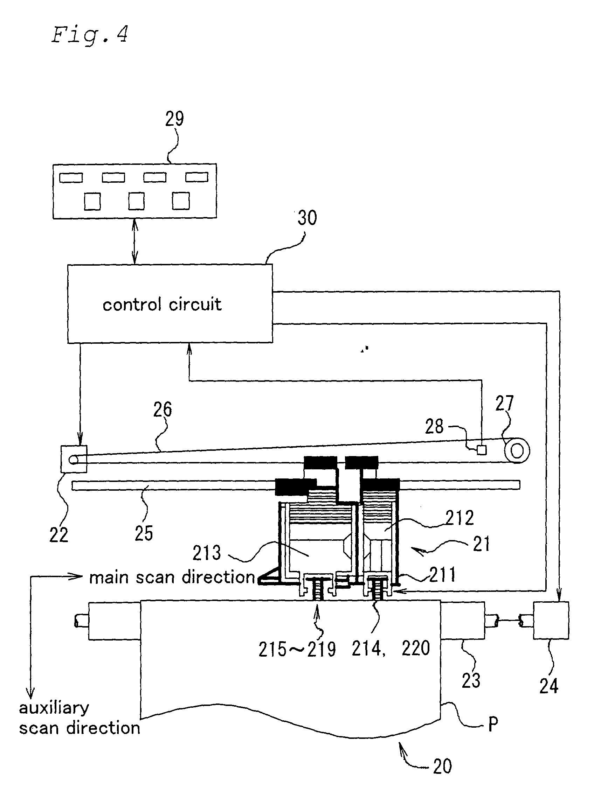

The following description of the general arrangement of the image output device pertaining to the first embodiment, namely, the color printer 20, makes reference to Fig. 4. Fig. 4 is a block diagram showing the general arrangement of components internal to the color printer 20.

Color printer 20 is capable of color image output. For example, an ink-jet printer forms color images by jetting inks of four colors --for example, cyan (C), magenta (M), yellow (Y) and black (K)-- onto a print medium to produce a dot pattern. An electrophotographic printer that produces images by transferring and fixing color toner onto a print medium. Besides the four colors listed above, light cyan (LC), light magenta (LM), or dark yellow (DY) may also be used.

As shown in the Figure 4, color printer 20 includes a mechanism for driving a print head 211 conveyed on a carriage 21 as the head projects ink to produce dots; a mechanism for producing, by way of a carriage motor 22, reciprocating motion of carriage 21 in an axial direction of a platen 23; a mechanism for advancing the printer paper P by way of a paper feed motor 24; and a control circuit 30. The mechanism for producing reciprocal motion of carriage 21 in the axial direction of platen 23 includes a slide rail 25 extending parallel to the axis of platen 23, for slidably retaining cartridge 21; a pulley 27 having an endless drive belt 26 operating between it and carriage motor 22; and a position sensor 28 for sensing the origin position of carriage 21. The mechanism for advancing printer paper P includes a platen 23; a paper feed motor 24 for turning platen 23; an auxiliary paper feed roller (not shown), and a gear train (not shown) for transmitting the rotation of paper feed motor 24 to platen 23 and the auxiliary paper feed roller.

Control circuit 30 exchanges signals with the control panel 29 of the printer for optimal control of the operation of paper feed motor 24, carriage motor 22, and print head 211. Printer paper P supplied to color printer 20 is arranged so as to be drawn between platen 23 and the auxiliary paper feed roller, and is advanced in predetermined increments depending on the angle of rotation of platen 23.

An ink cartridge 212 and ink cartridge 213 are installed on carriage 21. Ink cartridge 212 contains black (K) ink, while ink cartridge 213 contains other color inks, specifically, the three colors, cyan (C), magenta (M), yellow (Y), plus light cyan (LC), light magenta (LM), or dark yellow (DY), for a total of six color inks.

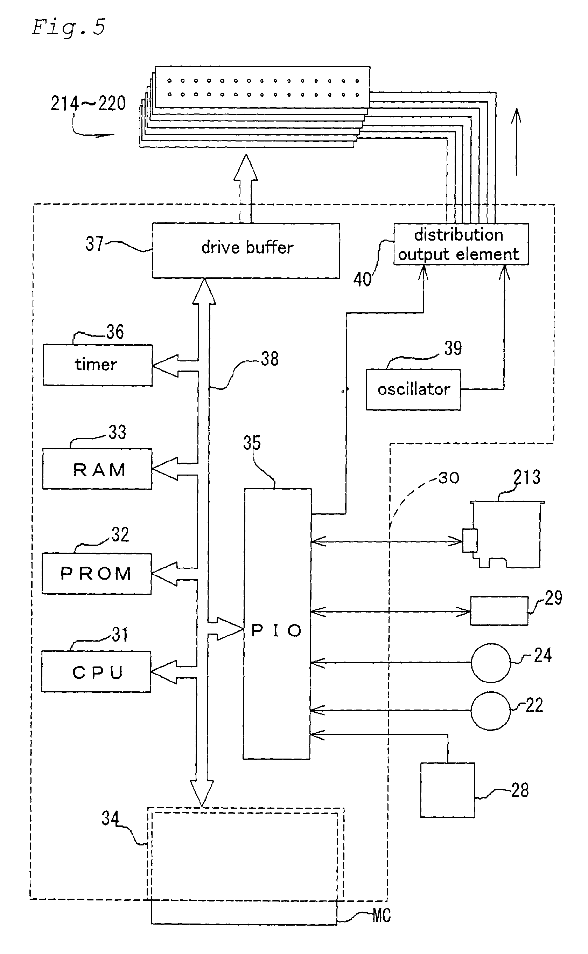

The internal arrangement of control circuit 30 of color printer 20 is now described with reference to Fig. 5. Fig. 5 is an illustrative diagram showing the internal arrangement of control circuit 30 of color printer 20. As shown in the drawing, control circuit 30 includes a CPU 31, PROM 32, RAM 33, a PCMCIA slot 34 for data interface with a memory card MC, a peripheral I/O bus (PIO) 35 for data interface with paper feed motor 24, carriage motor 22 etc., a timer 36, a drive buffer 37 etc. An I/O controller 3100 also connects to the other components via the PIO 35. The I/O controller 3100 is configured to exchange digital data (such as an Exif file) with external devices. The I/O controller 3100 operates with both wired and wireless I/O devices. Drive buffer 37 is used as a buffer for supplying dot ON/OFF signals to ink jet heads 214 -220. These are interconnected by mechanism of a bus 38 to enable data interface between them. Control circuit 30 additionally includes an oscillator 39 for outputting a drive waveform at a predetermined frequency, and a distribution output element 40 for distributing the output of oscillator 39 to ink jet heads 214 -220 under a predetermined timing arrangement.

Control circuit 30 reads out an image file 100 from memory card MC, analyzes the image processing control information Gl, and performs image processing on the basis of the analyzed image processing control information Gl. Control circuit 30 outputs dot data to drive buffer 37 under a predetermined timing arrangement synchronized with the motion of the paper feed motor 24 and carriage motor 22. The specifics of the image processing performed by control circuit 30 are discussed later.

### C. Image processing in image output device

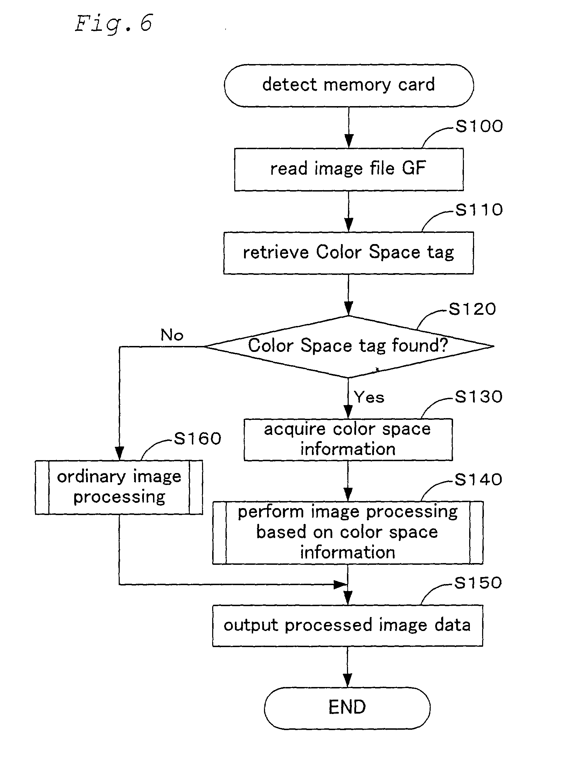

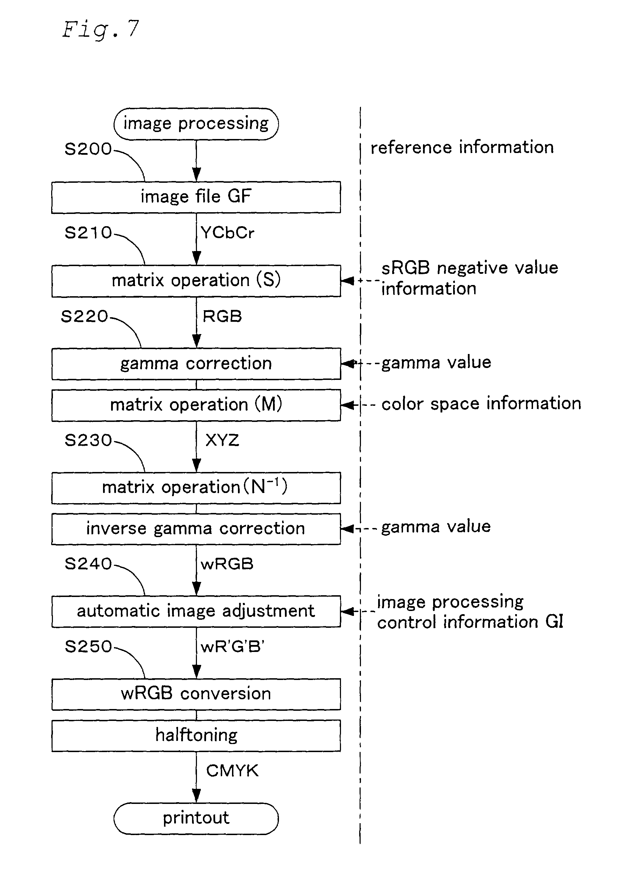

Image processing in the color printer 20 pertaining to the first embodiment is now described with reference to Figs. 6 and 7. Fig. 6 is a flow chart showing the processing routine for the printing process of color printer 20 pertaining to the first embodiment. Fig. 7 is a flow chart showing the flow of image processing in color printer 20.

When a memory card MC is inserted in slot 34, (or alternatively an Exif file is received through I/O controller 3100) the control circuit 30 (CPU 31) of printer 20 reads out an image file 100 from memory card MC, and temporarily places the image file 100 in RAM 33 (STEP S100). CPU 31 acquires the image processing control information Gl from the image file 100 and retrieves a Color Space tag designating the color space to be implemented during image processing (STEP S110). If CPU 31 has successfully retrieved a Color Space tag (STEP S120: Yes), it acquires and analyzes the designated color space information (STEP S130). CPU 31 then executes image processing, described later, on the basis of the analyzed color space information (STEP S140) and prints out the processed image data (STEP 150).

If CPU 31 has not successfully retrieved a Color Space tag (STEP S120: No), it acquires from ROM 32 default color space information stored in color printer 20, for example, sRGB color space information, and executes the usual image processing (STEP S160). CPU 31 then prints out the processed image data (STEP 150) and terminates the main processing routine.

Image processing in color printer 20 is now described in greater detail with reference to Fig. 7. The control circuit 30 (CPU 31) of color printer 20 extracts image data GD from image file 100 (STEP S200). As noted, digital still camera 12 stores image data as JPEG formatted files; to increase the compression ratio, image data in JPEG files is converted from the color space of the generated data (the sRGB color space) into the YCbCr color space for storage.

However, as PCs, printers and other devices typically handle only image data represented in an RGB color space, the color space of image data represented in the YCbCr color space must be converted to an RGB color space.

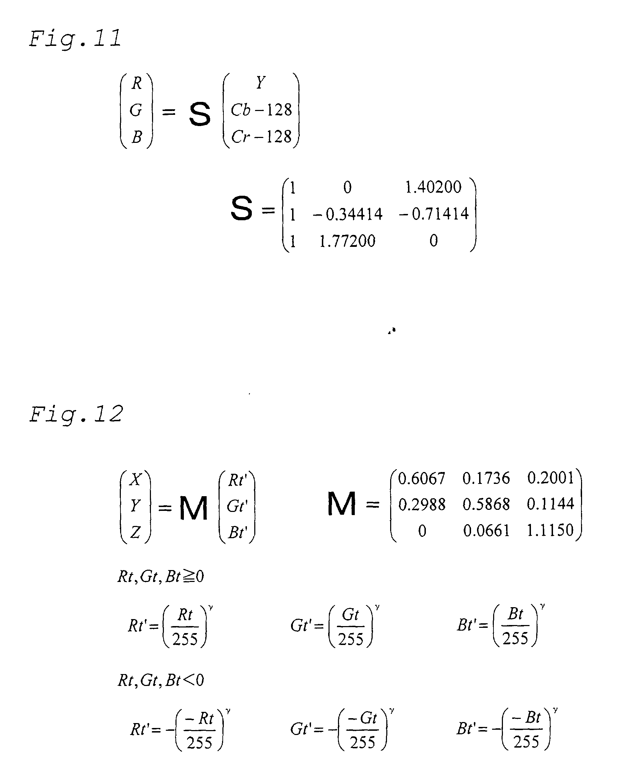

CPU 31 performs a 3 × 3 matrix operation S to convert the YCbCr image data to RGB image data (STEP S210). Matrix operation S is an operation defined in the JPEG File Interchange Format (JFIF) specification for converting image data color space from the YCbCr color space to the RGB color space, and is given by the equation illustrated in Figure 11.

When performing matrix operation S, even if the converted RGB color space image data contains second positive color values (color representation values) that are out of gamut with respect to first positive color values (color representation values) that represent the gamut defined in a predetermined RGB color space (e.g. the sRGB color space), or has negative color values (color representation values) that assume negative values in the RGB color space, CPU 31 handles these second positive color values and negative color values as effective values, without clipping the values to fall within the gamut of the sRGB color space, and stores these together with the first positive color values. Accordingly, if image data should contain second positive color values or negative color values, data capacity will exceed 8 bits. The sRGB color space is used as an example here because it is the color space typically used in standard operating systems (OS), such as WINDOWS, by MICROSOFT.

CPU 31 performs gamma correction and a matrix operation M on the RGB color space image processing device obtained in the preceding manner (STEP S220). Here, processing is performed in accordance with the color space information and the gamma value designated in the image processing control information Gl. During gamma correction, CPU 31 refers to the gamma value included in the parameters described earlier, and uses the established gamma value (native DSC value) for gamma conversion of image data.

Matrix operation M is an operation for converting the RGB color space to the XYZ color space. Matrix values in the 3 × 3 matrix (M) used for matrix operation M are specified in the image processing control information Gl, and stored at addresses designated by the Color Space tag. CPU 31 uses these matrix values to perform matrix operation M. The matrix values specified in the image processing control information Gl define a matrix for conversion of the sRGB color space or NTSC color space to the XYZ color space. The reason for representing the color space information contained in the Color Space tag in the XYZ color space is that the XYZ color space is an absolute color space that is moreover device-independent, not being dependent on a particular device such as a DSC or printer. By subjecting color values in a color space to matching in the XYZ color space during color space conversion, gamma matching can be accomplished in a device-independent manner. Matrix operation M is given by the equation shown in Figure 12.

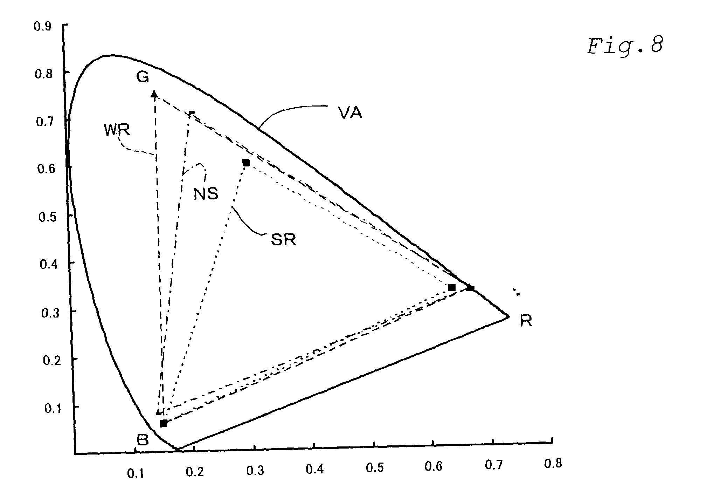

The visible area (VA) of the RGB color space and color space ranges (color gamuts) for the sRGB (SR), NTSC (NS), and wRGB (WR) color spaces are shown in Fig. 8. As will be apparent from Fig. 8, the sRGB color space has the narrowest color space range (area), with the NTSC color space range and wRGB color space range being wider than the sRGB color space range.

The color space of the image data GD derived from matrix operation M is the XYZ color space. In conventional practice, sRGB was the default color space for image processing in printers and computers, so the color space of DSC 12 could not be put to full advantage. In the present embodiment, on the other hand, a target color space (matrix values) for image processing is specified by image processing control information Gl in the image file GF, and the printer (printer driver) modifies the matrix (M) used for matrix operation M in response to the specified color space (i.e., using specified matrix values). Accordingly, even if DSC 12 generates image data in the NTSC-RGB color space --which is wider than the sRGB color space-- the color space used to generate the image data can nonetheless be utilized effectively by designating the NTSC-RGB color space as the target color space, so as to achieve accurate color reproduction.

In order to perform image adjustment based on arbitrary image quality adjustment parameters, CPU 31 converts the image data GD from the XYZ to the wRGB color space, i.e., it performs a matrix operation N⁻¹ and inverse gamma correction (STEP S230). As shown in Fig. 8 the wRGB color space is wider than the sRGB color space, so even second positive color values or negative color values that cannot be represented in the sRGB color space due being out of gamut can be handled as reproducible color values lying within the gamut of the wRGB color space. During inverse gamma correction CPU 31 refers to the color printer 20 gamma values included in the parameters described earlier, and performs inverse gamma conversion on the image data using the inverses of the established gamma values. During matrix operation N⁻¹ CPU 31 uses a matrix (N⁻¹) from ROM 31 for conversion to the wRGB color space to perform the matrix operation.
Matrix operation N⁻¹ is given by the equation of Figure 14.

The color space of the image data GD derived from matrix operation N⁻¹ is the wRGB color space. As noted, this wRGB color space is wider than the sRGB color space, and its gamut includes the RGB color space representable by DSC 12.

CPU 31 performs automatic image adjustment to impart desired qualities to the image (STEP S240). Here, processing is performed in accordance with certain arbitrarily established image quality adjustment information contained in the image processing control information Gl. During automatic image adjustment, CPU 31 refers to parameter values included among the aforementioned parameters, such as brightness, sharpness etc., and performs image adjustment on the image data using these preset parameter values. Where automatic adjustment parameters are specified, parameter values specified by automatic adjustment parameters may serve as the basis for other arbitrarily established parameters.

Where image quality adjustment information is not specified in the image processing, control information Gl of an image file GF, since automatic image adjustment parameters, e.g. parameters designating a photographed scene, are automatically appended by the DSC 12, CPU 31 performs image quality adjustment according to these automatic adjustment parameters.

CPU 31 performs wRGB color conversion and halftone processing for printing (STEP S250). For wRGB color conversion processing CPU 31 refers to a CMYK color space conversion lookup table (LUT) associated with the wRGB color space and stored in ROM 32, and converts the image data from the wRGB color space to the CMYK color space. Specifically, image data consisting of grayscale values for R, G, and B is converted, for example, to grayscale data for each of six colors (C, M, Y, K, LC, LM).

In halftone processing, the color-converted image data is subjected to grayscaling. In the present embodiment, color-converted data is represented as data having 256 shades for each color. In contrast, the color printer 20 in the embodiment can only assume one of two states: "print a dot" or "do not print a dot". That is, the printer 24 herein can only produce two shades in a given location. Thus, 256-shade image data is converted into image data that the color printer 20 can represent using two shades. Representative methods for two-shade conversion (binarization) are the error diffusion technique and the systematic dithering technique.

In color printer 20, if, prior to color conversion, the resolution of the image data is lower than the print resolution, new data lying between adjacent image data is generated by mechanism of linear interpolation; if, conversely, it is higher than the print resolution, a resolution conversion process wherein data is divided by a certain ratio to convert the image data resolution to the print resolution is performed. Color printer 20 subjects image data converted to dot print/not print format to an interlacing process wherein the data is rearranged in the sequence in which it will be sent to the color printer 20.

In the present embodiment all image processing is performed in the color printer 20, and a dot pattern is produced on the print medium according to the image data generated thereby. However, all or a portion of the image processing can be performed by the computer PC. This can be achieved by providing an image data processing application installed on the hard disk etc. of the computer PC with an image processing function, described with reference to Fig. 7. An image file GF generated by digital still camera 12 is supplied to computer PC via a cable CV or via a memory card MC. The application is run on the PC under user control, whereupon the application reads the image file GF, analyzes the image processing control information Gl, and converts and adjusts the image data GD. Alternatively, the application can be designed to run automatically when detecting insertion of a memory card MC or detecting attachment of a cable CV, or reception of a wireless print command signal, whereupon the application reads the image file GF, analyzes the image processing control information Gl, and converts and adjusts the image data GD automatically.

The DSC 12 of the first embodiment set forth hereinabove is capable of generating an image file specifying color space information to be used in color conversion performed by the printer 20. Thus, the color space characteristics used by the DSC can be interpreted correctly by the printer 20. Image processing in the color printer 20 in accordance with the first embodiment involves setting a target color space to be used during image processing on the basis of the image processing control information Gl contained in an image file GF, e.g. matrix values for a color conversion matrix, and performing color conversion of the image data GD using this information, so the colors in the image data can be reproduced correctly. It is therefore possible to eliminate differences between photographed images in DSC 12 and the output of color printer 20 due to different color spaces. Additionally, the color reproduction characteristics of DSC 12 can be reproduced accurately.

Color printer 20 is provided with a CMYK color space conversion table associated with the wRGB color space, which is wider than the sRGB color space. Accordingly, image data lying outside of the gamut of the sRGB color space can be handled effectively, and image data lying outside of the gamut of the sRGB color space can be used to achieve print output with higher saturation. That is, color information that cannot be represented in the sRGB color space due to being out of gamut can be utilized to achieve print output with higher saturation.

### D. Other Embodiments

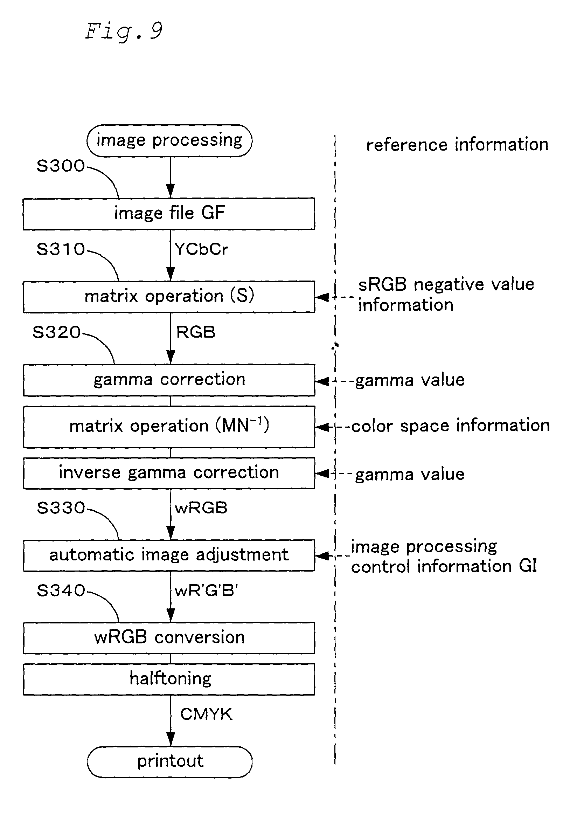

Image processing in color printer 20 may be performed in the manner shown in Fig. 9. Fig. 9 is a flow chart depicting image processing in a color printer 20 as a second embodiment. In this embodiment, during conversion of color space characteristics from the sRGB color space to the wRGB color space, image processing is accelerated by making matrix operation M and matrix operation N⁻¹ into a single matrix operation
(MN⁻¹) (STEP S320).

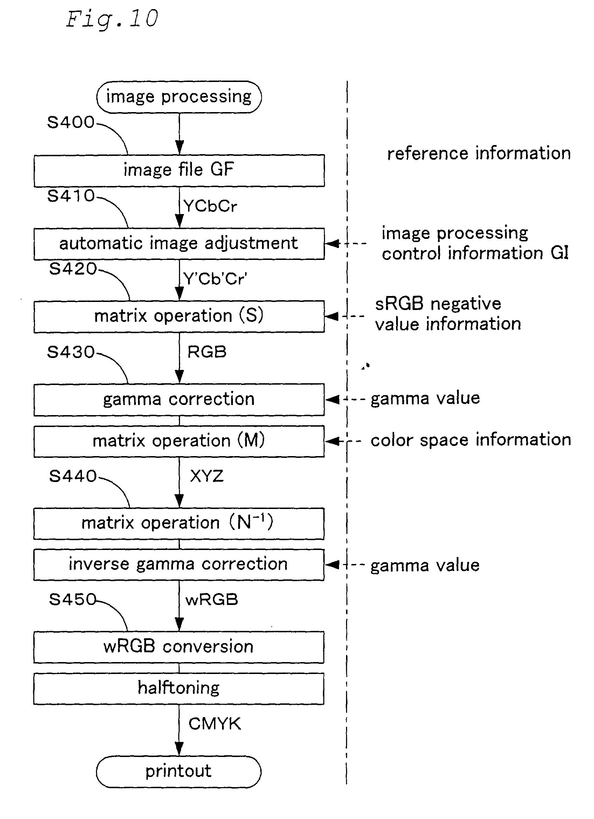

Image processing in color printer 20 may also be performed as indicated in Fig. 10. Fig. 10 is a flow chart depicting image processing in a color printer 20 as a third embodiment. In this embodiment, automatic image adjustment of image data not represented in the YCbCr color space is performed first (STEP 410). Next, image data on which automatic image adjustment has been completed is subjected to sequential color space conversions by mechanism of a matrix S operation (STEP S420), a matrix M operation (STEP S430), and a matrix N⁻¹ operation (STEP S440).

While all of the preceding embodiments of image processing employ a color printer 20, a display device such as a CRT, LCD, projector etc. could also be used as the output device. In this case, depending on the display device used as the output device, an image processing program (display driver) for executing the image processing described in Fig. 7, for example, could be used. Where a CRT, etc., functions as a display device for a computer, the image processing program can be run on the computer. In this case, the final output image data will have an RGB color space rather than the CMYK color space.

Thus, in a manner analogous to preserving in the print output of a color printer 20 the color space of image data generated by a DSC 12, it is possible to specify in an image file GF the display on a CRT or other display device. Thus, by including in the image processing control information Gl contained in the image file GF parameters adapted to a display device such as a CRT, or by including parameters optimized for the display characteristics of individual display devices, image data GD generated by a DSC 12 can be correctly displayed.

Although the image data generating device and image data output device aspects of the invention have been shown and described with respect to certain preferred embodiments, these embodiments merely serve to facilitate understanding of the invention and should not be construed as limiting. It is obvious that equivalent alterations and modifications will occur to others skilled in the art without departing from the scope and spirit of the invention.

For example, in the first embodiment it would be possible to execute processing so as to reflect specified color space information during the matrix M operation, without processing to render effective (preserve) second positive color values and negative color values during the matrix S operation. This enables the color space used in image data synthesis to be interpreted correctly during image processing so that correct color reproduction is achieved. Thus, device-independent color space conversion can be performed free from the effects of the native device color space of the input device, output device, etc. As a result, output from the output device will be similar to output of image data created photographically.

Further, the parameters shown herein are merely exemplary and not intended as limiting of the invention. Similarly the matrix values in the matrices S, M and N⁻¹ given by the equations are merely exemplary, and may be modified appropriately depending on the target color space, the color space used by the color printer 20, or other considerations.

While the embodiments set forth herein describe a DSC 12 as the image file generating device, scanners, digital video cameras or the like may be used as well. Where a scanner is used, specification of basic information and optional information for an image file GF may performed on a computer PC, or performed with the scanner independently by providing the scanner with preset buttons having assigned thereto preset information for setting information, or a display screen and setting buttons for making optional settings.

The color spaces employed in the embodiments set forth herein are merely exemplary, and other color spaces may be used. Image data generated by a DSC 12 or other image data generating device can be output so as to reflect the color space of the image data generating device.

While the first embodiment herein describes an Exif format image file GF, the image file format herein is not limited thereto. It is possible to use any image file that includes at a minimum image data for output by an output device, and information pertaining to the color space used in a digital still camera 12 or other image data generating device. The use of such files minimizes differences in output image between image data generated by the other image data generating device (image display through the agency of a monitor etc.) and the image output by the output device.

Image files GF that contain image data and output device control information Cl include files created by generating association data associated with the output device control information Cl, storing the image data and output device control information Cl in separate files so as to enable the image data and output device control information Cl to be associated by referring to the association data during image processing. While in this case image data and output device control information Cl are stored in separate files, during image processing using the output device control information Cl, the image data and output device control information Cl are indivisibly united, so functioning is substantially the same as with storage in a single file. Associated image data and output device control information Cl are at least during image processing, is included in image file GF in the present embodiment. Motion video files stored on optical media such as CD-ROM, CD-R, DVD-ROM and DVD-RAM are also included.

In the preceding embodiments, a digital still camera is used to generate image files, but a digital video camera could be used as well. Files generated by digital video cameras take the form of image files containing static image data and output control information, or motion video files containing motion video data (e.g. in MPEG format) and output control information. Where motion video files are used, some or all of the frames of the video are subjected to output control with reference to the output control information.

The color printer 20 of the first embodiment is merely exemplary, and the arrangement thereof is not limited to that shown in the embodiments herein. It sufficient for color printer 20 to have at a minimum the ability to analyze image processing control information Gl in an image file GF and to output (print) the image in accordance with recorded or specified color space information.

Obviously, numerous modifications and variations of the present invention are possible in light of the above teachings. For example, features described for certain embodiments may be combined with other embodiments described herein. It is therefore to be understood that within the scope of the appended claims, the invention may be practiced otherwise than as specifically described herein.

This document is based on the Japanese Application to which priority is claimed, the entire contents of which being incorporated herein by reference.

## Claims

1. An image data generating apparatus comprising:
means for generating image data;
means for generating color space information to be used in processing said image data by an image processing apparatus; and
means for storing said image data in association with said color space information.

2. An image data generating apparatus according to Claim 1, further comprising:
means for designating color space information for use by said image processing apparatus; and
means for storing a plurality of items of color space information designated for different types of color spaces, wherein
said means for designating color space information includes
means for displaying said plurality of items of color space information, and
means for selecting one item of color space information from among said displayed items of color space information.

3. An image data generating apparatus according to Claim 1, further comprising:
means for designating color space information for use by said image processing apparatus; and
means for storing a plurality of combinations of identifying information for candidate image processing apparatuses and associated color space information for each candidate image processing apparatus; wherein
said means for designating color space information includes
means for displaying the candidate image processing apparatuses for performing image processing, and
means for selecting one of the candidate image processing apparatuses from among the candidate image processing apparatuses displayed by said means for displaying.

4. An image data generating apparatus according to Claim 1, further comprising:
means for assembling an output file that contains said image data, and said color space information.

5. An image data generating apparatus according to Claim 4, further comprising:
means for interfacing with an external device and for communicating said output file to said external device.

6. An image data generating apparatus comprising:
means for acquiring image data;
means for designating with color space information an output color space to be used by an image processing apparatus in color space conversion, said image processing apparatus being a different apparatus than said means for acquiring data; and
means for generating an image file containing
image data obtained by said means for acquiring, and
the color space information.

7. An image data generating apparatus according to Claim 6,wherein:
said output color space having a gamut that is at least as wide as a color space used in synthesis of said image data.

8. A method for generating an image file, comprising steps of:
generating image data;
generating an image file containing
image data generated in said generating step, and
color space information to be used in processing said image data by an
image processing apparatus; and
storing said image data in association with said color space information.

9. The method of Claim 8, further comprising steps of:
designating color space information for use by said image processing apparatus; and
storing a plurality of items of color space information designated for different types of color spaces, wherein
said step of designating color space information includes steps of
displaying said stored color space information, and
selecting one item of color space information from among said displayed items of color space information.

10. The method of Claim 8, further comprising steps of:
designating color space information for use by said image processing apparatus; and
storing a plurality of combinations of identifying information for candidate image processing apparatuses and associated color space information for each candidate image processing apparatus; wherein
said step of designating color space information includes
displaying the candidate image processing apparatuses for performing image processing, and
selecting one of the candidate image processing apparatuses from among the candidate image processing apparatuses displayed in said displaying step.

11. The method of Claim 8, further comprising a step of:
assembling an output file that contains said image data, and said color space information.

12. The method of Claim 11, further comprising a step of:
sending said output file to an external device via at least one of an electric signal and an electromagnetic signal.

13. A method for generating image data, comprising steps of:
acquiring image data;
designating with color space information an output color space to be used by an image processing apparatus in color space conversion, said image processing apparatus being a different apparatus than a apparatus employed to accomplish said acquiring step; and
generating an image file containing
image data obtained by said acquiring step, and
the color space information.

14. The method of Claim 13,wherein:
said output color space having a gamut that is at least as wide as a color space used in synthesis of said image data.

15. A propagated data signal for conveying image data and color space information to an image processing apparatus, said propagated data signal comprising:
an image data file containing digital image data of a subject captured on an image data generating apparatus; and
the color space information, said color space information being associated with an image processing apparatus that performs a color space conversion on said image data in said image processing apparatus.

16. The propagated data signal of Claim 15, wherein:
said image data file and said color space information being included as part of an Exif file that is embodied in said propagated data signal.

17. An image data generating apparatus comprising:
an image data generation mechanism configured to generate image data;
an image file assembly mechanism configured to assemble an image file containing image data generated by said image data generation mechanism, and color space information to be used in processing said image data by an image processing apparatus; and
a memory configured to store said image data in association with said color space information.

18. An image data generating apparatus according to Claim 17, wherein:
said color space information includes matrix values for use in color space conversion processing to be executed by said image processing apparatus.

19. An image data generating apparatus according to Claim 17, further comprising:
a designation mechanism configured to designate color space information for use by said image processing apparatus, wherein
said memory configured to hold a plurality of color space information entries, each containing color space information associated with different candidate image processing apparatuses,
said designation mechanism includes
a display that is configured to display said plurality of entries of color space information, and
a selection mechanism that is configured to select one of said plurality of entries of color space information from among the plurality of entries presented by said display.

20. An image data generating apparatus according to Claim 17, further comprising:
a designation mechanism configured to designate color space information for use by said image processing apparatus, wherein
said memory is configured to hold a plurality of combinations of identifying information for candidate image processing apparatuses and associated color space information for each candidate image processing apparatus, wherein
said designation mechanism includes
a display configured to display the candidate image processing apparatuses for performing image processing, and
a selection mechanism configured to select one of the candidate image processing apparatuses from among the candidate image processing apparatuses presented by said display.

21. An image data generating apparatus according to Claim 17, wherein:
the image generation mechanism being at least one of a DSC, a DVC, and a scanning device.

22. An image data generating apparatus according to Claim 21, wherein:
image generation mechanism being the DSC.

23. An image data generating apparatus according to Claim 17, further comprising:
a file assembly mechanism configured to compile an output file that contains said image data, and said color space information.

24. An image data generating apparatus according to Claim 23, wherein:
said output file being an Exif file.

25. An image data generating apparatus according to Claim 24, wherein:
the color space information being a tag stored in a Makernote portion of the Exif file.

26. An image data generating apparatus according to Claim 17, wherein:
said memory includes a removable memory card.

27. An image data generating apparatus according to Claim 23, further comprising:
an I/O interface configured to transmit said output file as at least one of an electric signal and an electromagnetic signal.

28. An image data generating apparatus comprising:
an image file acquisition mechanism configured to acquire image data;
a designation mechanism configured to designate an output color space to be used by an image processing apparatus in color space conversion of said image data, said image processing apparatus being a different apparatus than said image file acquisition mechanism; and
a file assembly mechanism configured to assemble an image file containing
image data obtained by said image file acquisition mechanism, and
the color space information.

29. An image data generating apparatus according to Claim 28, wherein:
said output color space having a gamut that is at least as wide as a color space used in synthesis of said image data.

30. A computer program product, comprising:
a computer storage medium; and
a computer program code mechanism embedded in the computer storage medium for causing a computer to generate an image file, the computer program code mechanism having
a first computer code device configured to generate image data, and
a second computer code device configured to generate an image file containing said generated image data, together with associated color space information for use by an image processing apparatus.

31. The computer program product of Claim 30, further comprising:
a third computer code device configured to designate color space information for use by said image processing apparatus, wherein
said computer storage medium configured to hold a plurality of color space information entries, each containing color space information associated with different candidate image processing apparatuses,
the third computer code device including
a display mechanism that is configured to provide a signal output suitable for presentation on a display so as to present said plurality of entries of color space information, and
a selection mechanism that is configured to select one of said plurality of entries of color space information from among the plurality of entries presented by said display.

32. The computer program product of Claim 30, further comprising:
a third computer code device configured to designate color space information for use by said image processing apparatus, wherein
said computer storage medium configured to hold a plurality of combinations of identifying information for candidate image processing apparatuses and associated color space information for each candidate image processing apparatus, wherein
said designation mechanism includes
the third computer code device including
a display mechanism that is configured to provide a signal output suitable for presentation on a display so as to present the candidate image processing apparatuses for performing image processing, and
a selection mechanism that is configured to select one of the candidate image processing apparatuses from among the candidate image processing apparatuses presented by said display.

33. The computer program product of Claim 30, further comprising:
a third computer code device configured to compile an output file that contains said image data, and said color space information.

34. A computer program product, comprising:
a computer storage medium; and
a computer program code mechanism embedded in the computer storage medium for causing a computer to acquire image data, the computer program code mechanism having
a first computer code device configured to implement an image file acquisition mechanism configured to acquire image data,
a second computer code device configured to implement a designation mechanism configured to designate an output color space to be used by an image processing apparatus in color space conversion of said image data, said image processing apparatus being a different apparatus than said image file acquisition mechanism; and
a third computer code device configured to implement a file assembly mechanism configured to assemble an image file containing
image data obtained by said image file acquisition mechanism, and
the color space information.

35. The computer program product of Claim 34, wherein:
said output color space having a gamut that is at least as wide as a color space used in synthesis of said image data.

36. A computer program product, comprising:
a computer storage medium; and
a computer program code mechanism embedded in the computer storage medium for causing a computer to acquire an image file, the computer program code mechanism having
a first computer code device configured to implement an image file data acquisition mechanism that retrieves said color space information from said image file; and
a second computer code device configured to implement a color conversion processing mechanism that converts the color space of said image data on the basis of said color space information when said color space information has been retrieved.

37. The computer program product of Claim 36, wherein:
if said color space information is not retrieved, said color conversion processing mechanism converts the color space of said image data using predetermined color space information.

38. An image processing apparatus for performing image processing on image files containing image data and color space information, comprising:
means for acquiring an image file containing image data;
means for retrieving said color space information from said image file acquired by said means for acquiring; and
means for converting the color space of said image data based on said color space information retrieved by said means for retrieving.

39. An image processing apparatus according to Claim 38, wherein:
if said color space information is not retrieved, said means for converting the color space converts the color space of said image data based on predetermined color space information.

40. An image processing apparatus according to Claim 38, wherein:
said image data contained in said image file is represented by a first color space;
said means for acquiring an image file converts the color space of the image data contained in said image file from said first color space to a second color space; and
said means for converting the color space converts the color space of said image data from said second color space to a third color space.

41. An image processing apparatus according to Claim 40, wherein:
said first color space is a YCbCr color space;
said second color space is a first RGB color space; and
said third color space is a second RGB color space wherein at least a portion thereof has a gamut equal to or wider than said first color space.

42. An image processing apparatus according to Claim 41, wherein:
said second color space has a width at least equal to that of a color space during synthesis of said image data.

43. A method for performing image processing on image files containing image data and color space information, comprising steps of:
acquiring an image file containing image data;
retrieving said color space information from said image file acquired in said acquiring step; and
converting the color space of said image data based on said color space information retrieved in said retrieving step.

44. The method of Claim 43, further comprising:
determining when said color space information is not retrieved, and then converting the color space of said image data based on predetermined color space information.

45. An image processing apparatus for performing image processing on image files containing image data and color space information, comprising:
an image file acquisition mechanism configured to acquire an image file containing image data;
a color space retrieving mechanism configured to retrieve said color space information from said image file acquired by said image file acquisition mechanism; and
a color space converter configured to convert the color space of said image data based on said color space information retrieved by said color space retrieving mechanism.

46. An image processing apparatus according to Claim 45, wherein:
if said color space information is not retrieved, color space converter converts the color space of said image data based on predetermined color space information.

47. An image processing apparatus according to Claim 45, wherein:
said image data contained in said image file is represented by a first color space;
said image file acquisition mechanism converts the color space of the image data contained in said image file from said first color space to a second color space; and
said color space converter converts the color space of said image data from said second color space to a third color space.

48. An image processing apparatus according to Claim 47, wherein:
said first color space is a YCbCr color space;
said second color space is a first RGB color space; and
said third color space is a second RGB color space wherein at least a portion thereof has a gamut equal to or wider than the first RGB color space.

49. An image processing apparatus according to Claim 48, wherein:
said second color space has a width at least equal to that of a color space during synthesis of said image data.

50. An image processing apparatus according to Claim 48, wherein:
said third color space is a CIELAB color space in place of the second RGB color space.

51. An image processing apparatus according to Claim 45, further comprising:
an I/O device configured to transmit said image data after being converted into a color space defined by said color space information as at least one of an electric signal and an electromagnetic signal.

52. A system for processing image data comprising:
an image data generating apparatus, including
means for generating image data,
means for generating an image file containing
image data generated by said means for generating, and
color space information to be used in processing said image data by an image processing apparatus, and
means for storing said image data in association with said color space information in an image file; and
the image processing apparatus, including
means for acquiring the image file containing the image data and the color space information,
means for retrieving said color space information from said image file, and
means for converting the color space of said image data based on said color space information retrieved by said means for retrieving.

53. A system for processing image data comprising:
an image data generating apparatus, including,
means for acquiring image data,
means for designating with color space information an output color
space to be used by an image processing apparatus in color space conversion, said image processing apparatus being a different apparatus than said means for acquiring, and
means for generating an image file containing
image data obtained by said means for acquiring, and
the color space information; and
the image processing apparatus, including,
means for acquiring the image file,
means for retrieving said color space information from said image file acquired by said means for acquiring, and
means for converting the color space of said image data based on said color space information retrieved by said means for retrieving.

54. A method for processing image data, comprising steps of:
generating image data;
generating an image file containing
image data generated in said generating step, and
color space information to be used in processing said image data by an image processing apparatus;
storing said image data in an output image file in association with said color space information;
acquiring the output image file containing image data;
retrieving said color space information from said output image file acquired in said acquiring step; and
converting the color space of said image data based on said color space information retrieved in said retrieving step.

55. An image processing system, comprising:
an image data generating apparatus, including,
an image data generation mechanism configured to generate image data,
an image file assembly mechanism configured to assemble an image file containing image data generated by said image data generating apparatus, and color space information to be used in processing said image data by an image processing apparatus,
a memory configured to store said image data in an output image file in association with said color space information; and
the image processing apparatus including
an image file acquisition mechanism configured to acquire the output image file containing image data,
a color space retrieving mechanism configured to retrieve said color space information from said output image file acquired by said image file acquisition mechanism, and
a color space converter configured to convert the color space of said image data based on said color space information retrieved by said color space retrieving mechanism.

56. An image processing system comprising:
an image data generating apparatus, including
an image file acquisition mechanism configured to acquire image data;
a designation mechanism configured to designate an output color space to be used by an image processing apparatus in color space conversion of said image data, said image processing apparatus being a different apparatus than said image file acquisition mechanism, and
a file assembly mechanism configured to assemble an image file containing
image data obtained by said image file acquisition mechanism, and
the color space information; and
the image processing apparatus including
an image file acquisition mechanism configured to acquire the image file,
a color space retrieving mechanism configured to retrieve said color space information from said image file, and
a color space converter configured to convert the color space of said image data based on said color space information retrieved by said color space retrieving mechanism.
